# EUROPÄISCHE PATENTSCHRIFT

(11) **EP 4 342 013 B1**
(45) Veröffentlichungstag und Bekanntmachung des Hinweises auf die Patenterteilung: **04.06.2025**
(21) Anmeldenummer: 22750781.1
(22) Anmeldetag: 11.07.2022
(51) Int. Cl.: H01M 8/0662, H01M 8/249

(54) **BEHANDLUNG WASSERSTOFFHALTIGER UND SAUERSTOFFHALTIGER RESTGASE VON BRENNSTOFFZELLEN**
TREATMENT OF HYDROGEN AND OXYGEN CONTAINING RESIDUAL GASES OF FUEL CELLS
TRAÎTEMENT DES GAZES RESIDUES DES PILES À COMBUSTIBLE, COMPRENANT DE'L HYDROGÈNE ET DE L'OXYGÈNE

(30) Priorität: 28.07.2021 DE 102021208146
(43) Veröffentlichungstag der Anmeldung: 27.03.2024
(73) Patentinhaber: Siemens Energy Global GmbH & Co. KG, 81739 München (DE)
(72) Erfinder: BRANDT, Torsten, 91301 Forchheim (DE); BRAUNECKER, Michael, 90419 Nürnberg (DE); STRAUB, Fabian, 91093 Heßdorf (DE)
(86) Internationale Anmeldenummer: PCT/EP2022/069251
(87) Internationale Veröffentlichungsnummer: WO 2023/006396

(56) Entgegenhaltungen:
- EP-B1- 1 750 321
- US-A1- 2005 014 037
- US-A1- 2008 248 369
- US-A1- 2021 175 530

## Beschreibung

Die Erfindung betrifft eine Brennstoffzellenanordnung mit Brennstoffzellen und einer Restgasbehandlungsvorrichtung für wasserstoffhaltige und sauerstoffhaltige Restgase der Brennstoffzellen sowie ein Verfahren zur Behandlung wasserstoffhaltiger und sauerstoffhaltiger Restgase von Brennstoffzellen.

Brennstoffzellen, Brennstoffzellenanordnungen mit einer Mehrzahl von Brennstoffzellen, sowie Verfahren zu deren Betrieb sind im Stand der Technik umfänglich bekannt. Brennstoffzellen sind galvanische Zellen, die bei einer, insbesondere exergonen, chemischen Reaktion von wenigstens zwei Reaktionsgasen freiwerdende Energie zumindest teilweise als elektrische Energie bereitstellen. Brennstoffzellen dienen somit unter anderem der elektrischen, aber unter Umständen auch der thermischen Energieversorgung.

Brennstoffzellen werden unter anderem bei stationären Anwendungen eingesetzt, um beispielsweise unterbrechungsfreie Energieversorgungen, Inselnetze und/oder dergleichen bereitstellen zu können. Darüber hinaus kann auch Wärmeenergie für Heizungszwecke mit Brennstoffzellen bereitgestellt werden.

Ferner ist der Einsatz von Brennstoffzellen auch bei Fahrzeugen, beispielsweise Wasserfahrzeugen wie Fähren oder U-Booten, Luftfahrzeugen, aber auch bei Kraftfahrzeugen vorgesehen, insbesondere bei elektrisch antreibbaren Fahrzeugen wie beispielsweise Elektrofahrzeuge, Hybridfahrzeuge oder dergleichen.

Häufig ist auch vorgesehen, dass die Reichweite von elektrisch antreibbaren Fahrzeugen durch die Nutzung von Brennstoffzellen verbessert werden soll, bei denen neben oder alternativ zum Einsatz von einer jeweiligen Fahrzeugbatterie zur elektrischen Energieversorgung einer elektrischen Antriebseinrichtung des Fahrzeugs auch Brennstoffzellen vorgesehen werden.

Eine häufig verwendete Art einer Brennstoffzelle ist die Wasserstoff-Sauerstoff-Brennstoffzelle, bei der in einer elektrochemischen Reaktion von Wasserstoff und Sauerstoff in der Regel elektrische Energie und Wärme erzeugt werden. Die Zufuhr von Sauerstoff kann auch durch Luft ersetzt oder ergänzt sein, je nach Konstruktion der Brennstoffzelle. Als Reaktionsprodukt entsteht unter anderem Wasser. Darüber hinaus sind aus der Brennstoffzelle im Bereich der jeweiligen Elektrode entsprechende Restgase abzuführen, so beispielsweise an der als Anode dienenden Elektrode ein wasserstoffhaltiges Restgas und an der als Kathode dienenden Elektrode ein sauerstoffhaltiges Restgas.

Im bestimmungsgemäßen Betrieb der Wasserstoff-Sauerstoff-Brennstoffzelle wird Wasserstoff der Anode zugeführt, wohingegen Sauerstoff der Kathode zugeführt wird. Die Elektroden stehen über einen Elektrolyten, der beispielsweise durch eine Polymerelektrolytmembran oder dergleichen gebildet sein kann, elektrochemisch miteinander in Wechselwirkung. Das Zuführen des Wasserstoffs kann entweder durch ein reines Wasserstoffgas oder auch durch ein wasserstoffhaltiges Brenngas realisiert sein. Ebenso kann das Zuführen des Sauerstoffs durch reines Sauerstoffgas oder beispielsweise auch in Form von Luft realisiert sein.

Bei einer derartigen Wasserstoff-Sauerstoff-Brennstoffzelle wird in der Regel eine Gleichspannung zwischen den Elektroden bereitgestellt, die zum Beispiel etwa 1 V oder weniger betragen kann. Daher wird üblicherweise eine Mehrzahl von Brennstoffzellen elektrisch in Reihe geschaltet betrieben und kann zu einem Brennstoffzellenstapel einer Brennstoffzellenanordnung zusammengefasst sein.

Beim Betrieb von Brennstoffzellen fallen am Austritt nicht umgesetzte Restgase an. Diese werden im Normalfall an die Umgebung abgegeben. Im Falle einer Polymerelektrolyt-Brennstoffzelle sind das zum einen wasserstoffhaltiges Restgas und zum anderen sauerstoffhaltiges Restgas. Ist ein Betrieb der Brennstoffzelle in einem abgeschlossenen System gefordert, müssen die Restgase weggespeichert werden. Um ein sicheres Wegspeichern zu ermöglichen muss der Wasserstoffgehalt in den Restgasen unter die Explosionsgrenze reduziert werden, im besten Fall ganz vermieden werden.

Nichtbetriebene Module können Wasserstoff auch auf der Sauerstoffseite aufweisen, beispielsweise wenn die Gasräume zur Vermeidung von Korrosion und Oxidierungen mit Wasserstoff beaufschlagt worden sind.

Vor der Inbetriebnahme der Brennstoffzelle wird zwar erst mit Stickstoff gespült, trotzdem kann auf der Sauerstoffseite "neuer Sauerstoff" auf "alten Wasserstoff" treffen und mit ihm reagieren, wobei thermische Energie in Mengen frei werden kann, welche die Brennstoffzelle(n) beschädigen können.

Überschüssiger Wasserstoff kann daher oft nachgeschaltet mit sogenannten katalytischen Brennern bzw. Rekombinatoren mit Hilfe von vorhandenem Sauerstoff abreagieren. Diese katalytischen Brenner bzw. Rekombinatoren sind separierte Bauteile.

Solche Rekombinatoren sind z.B in US 2008/248369 oder EP 1750321 beschrieben.

Ein Verfahren zur Behandlung wasserstoffhaltiger und sauerstoffhaltiger Restgase von Brennstoffzellen sowie ein Restgasbehandlungssystem offenbart beispielsweise die WO 2020/038907 A1. Die Lehre der WO 2020/038907 A1 eignet sich besonders für einen im Wesentlichen geschlossenen Betrieb einer Brennstoffzellenanordnung, bei der die Restgase nicht ohne Weiteres an eine Umgebung, beispielsweise eine Umgebungsatmosphäre oder dergleichen, abgegeben werden sollen. Auch wenn sich diese Lehre bewährt hat, so zeigen sich dennoch Nachteile. Gerade bei Betriebszustandsänderungen der Brennstoffzelle, insbesondere bei einem Einschaltvorgang beziehungsweise bei einem Ausschaltvorgang der Brennstoffzelle, kann im Restgaskreislauf eine unerwünschte Gaszusammensetzung des Restgasgemisches entstehen, die die optimale Nutzung gemäß der Lehre der WO 2020/038907 A1 beeinflussen kann.

Der Erfindung liegt daher die Aufgabe zugrunde, eine Brennstoffzellenanordnung mit Brennstoffzellen und einer Restgasbehandlungsvorrichtung für wasserstoffhaltige und sauerstoffhaltige Restgase der Brennstoffzellen, sowie ein Verfahren zur Behandlung wasserstoffhaltiger und sauerstoffhaltiger Restgase von Brennstoffzellen bereitzustellen, um eine weitgehend optimale Restgasbehandlung realisieren zu können.

Als Lösung werden mit der Erfindung eine Brennstoffzellenanordnung mit Brennstoffzellen und einer Restgasbehandlungsvorrichtung für wasserstoffhaltige und sauerstoffhaltige Restgase der Brennstoffzellen, sowie ein Verfahren zur Behandlung wasserstoffhaltiger und sauerstoffhaltiger Restgase von Brennstoffzellen gemäß den unabhängigen Ansprüchen vorgeschlagen.

Vorteilhafte Weiterbildungen ergeben sich durch Merkmale der abhängigen Ansprüche.

Die Erfindung löst die auf eine Brennstoffzellenanordnung gerichtete Aufgabe, indem sie vorsieht, dass bei einer derartigen Brennstoffzellenanordnung, umfassend mehrere in einem Brennstoffzellenstapel elektrisch und mechanisch zusammengefasste Brennstoffzellen, weiter umfassend eine Restgasbehandlungsvorrichtung für wasserstoffhaltige und sauerstoffhaltige Restgase der Brennstoffzellen, die Restgasbehandlungsvorrichtung eine Rekombinationsbrennstoffzelle mit Katalysator und Membran umfasst, welche über einen von den Brennstoffzellen separierten Stromkreis geleitet ist.

Der Aufbau der Brennstoffzellenanordnung wird durch eine oder mehrere sogenannte Rekombinationszellen erweitert. Diese Brennstoffzellen sind normale Zellen mit Katalysator und Membran, wie in der Brennstoffzellenanordnung eingesetzt. Die entstehenden Restgase werden in die Rekombinationsbrennstoffzelle geleitet und dort elektrochemisch zu Wasser umgesetzt. Die Rekombinationsbrennstoffzelle wird über einen von den übrigen Brennstoffzelle separierten Stromkreis geleitet.

In einer vorteilhaften Ausführungsform der Erfindung, ist die Rekombinationsbrennstoffzelle den Brennstoffzellen im Brennstoffzellenstapel direkt nachgeschaltet, was einen kompakten Aufbau ermöglicht.

In einer alternativen Ausführungsform ist die Rekombinationsbrennstoffzelle außerhalb des Brennstoffzellenstapels angeordnet. Hierbei kann der bisherige Brennstoffzellenstapel unverändert bleiben.

Gemäss der Erfindung ist vorgesehen dass eine Spannungs- und/oder Strommessvorrichtung in die Rekombinationsbrennstoffzelle integriert oder an die Rekombinationsbrennstoffzelle angeschlossen ist. Damit kann die Umsetzung von Wasserstoff im Restgas gemessen werden und im besten Fall eine Aussage über die Wasserstoffmenge am Ausgang der Rekombinationszelle gegeben werden.

In einer weiteren vorteilhaften Ausführungsform der Erfindung ist eine Blechrekombinationszelle zwischen den Brennstoffzellen und der Rekombinationsbrennstoffzelle angeordnet, wobei in der Blechrekombinationszelle die Membran der Rekombinationsbrennstoffzelle durch ein Blech ersetzt ist. Durch das Blech in der Zellmitte wird diese Blechrekombinationszelle mechanisch und thermisch stabiler. Infolge der direkten Abreaktion von Reaktantengemischen aus den Brennstoffzellen im Brennstoffzellenstapel in der mechanisch stabileren Blechrekombinationszelle kann eine mögliche Schädigung der nachfolgenden Membran-Rekombinationsbrennstoffzelle verhindert werden.

Die auf ein Verfahren zur Behandlung wasserstoffhaltiger und sauerstoffhaltiger Restgase von Brennstoffzellen gerichtete Aufgabe wird gelöst durch ein Verfahren, bei dem die Restgase von in einem Brennstoffzellenstapel elektrisch und mechanisch zusammengefassten Brennstoffzellen einer Rekombinationsbrennstoffzelle zugeführt werden, welche über einen von den Brennstoffzellen separierten Stromkreis geleitet ist.

Vorteilhafter Weise werden die Restgase innerhalb des Brennstoffzellenstapels der Rekombinationsbrennstoffzelle zugeführt.

Alternativ dazu kann es vorteilhaft sein, wenn die Restgase aus dem Brennstoffzellenstapel herausgeleitet und einer außerhalb des Stapels angeordneten Rekombinationsbrennstoffzelle zugeführt werden.

Dabei ist es zweckmäßig, wenn Spannung und/oder Stromstärke der Rekombinationsbrennstoffzelle gemessen wird.

Vorteilhafter Weise strömen Restgase zuerst durch eine Blechrekombinationszelle, in der eine Membran der Rekombinationsbrennstoffzelle durch ein Blech ersetzt ist, bevor sie in die Rekombinationsbrennstoffzelle geleitet werden.

Mit der Erfindung kann die Rekombination der Restgase direkt im Aufbau des Brennstoffzellenstapels integriert werden. Über die Spannungs- und/oder Strommessung kann die Reaktivität der Rekombinationszelle gemessen werden und es werden keine weiteren Gassensoren benötigt. Es entsteht ein deutlicher geometrischer Vorteil durch die Integration in den Brennstoffzellenstapel. Das Rekombinationssystem kann aufgrund seines Aufbaus optimal gekühlt werden. In bestimmten Fällen wäre auch eine Energierückgewinnung der Reaktanten möglich.

Die Erfindung wird beispielhaft anhand der Zeichnungen näher erläutert. Es zeigen schematisch und nicht maßstäblich:
- Figur 1: eine erste Brennstoffzellenanordnung nach der Erfindung,
- Figur 2: einen prinzipiellen Aufbau einer PEM-Brennstoffzelle,
- Figur 3: eine zweite Brennstoffzellenanordnung nach der Erfindung und
- Figur 4: eine dritte Brennstoffzellenanordnung nach der Erfindung.

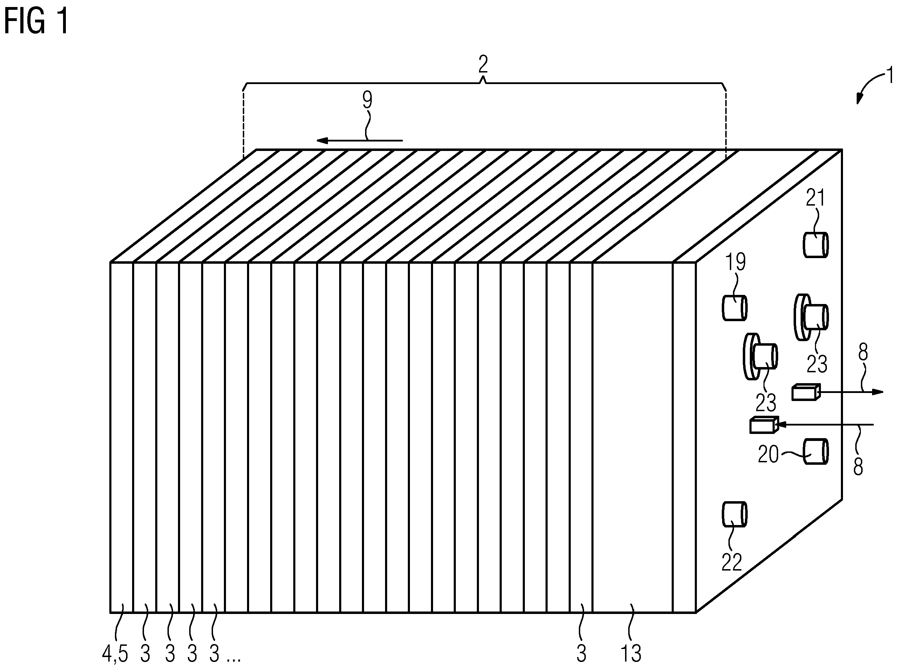

FIG 1 zeigt in vereinfachter Darstellung eine Brennstoffzellenanordnung 1, die einen Brennstoffzellenstapel 2 und einen Betriebsteil 13 umfasst. Der Brennstoffzellenstapel 2 besteht aus mehreren aufeinander gestapelten und hierdurch elektrisch in Reihe geschalteten einzelnen Brennstoffzellen 3, hier PEM-Brennstoffzellen.

Weiter zeigt die Figur 1 eine erfindungsgemäße Restgasbehandlungsvorrichtung 4 für wasserstoffhaltige und sauerstoffhaltige Restgase der Brennstoffzellen 3 des Brennstoffzellenstapels 2. Diese Restgasbehandlungsvorrichtung 4 umfasst eine Rekombinationsbrennstoffzelle 5, deren prinzipieller Aufbau sich nicht von dem einer Brennstoffzelle 3 des Brennstoffzellenstapels 2 unterscheidet. Die Rekombinationsbrennstoffzelle 5 ist bzgl. einer Strömungsrichtung 9 der Reaktanden den Brennstoffzellen 3 nachgeschaltet, aber nicht mit diesen elektrisch in Reihe geschaltet, sondern wird über einen von den Brennstoffzellen 3 separierten Stromkreis 8 geführt.

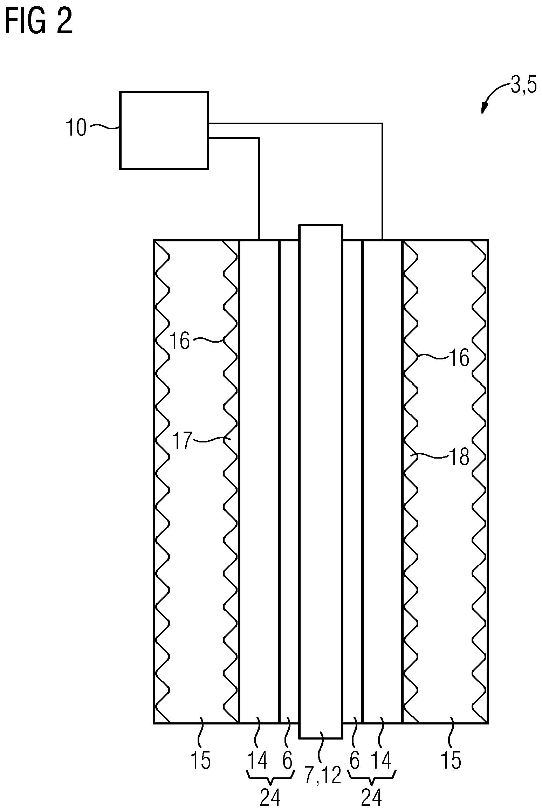

Figur 2 zeigt in vereinfachter Form im Schnitt den Brennstoffzellenaufbau. Jede der Brennstoffzellen 3 bzw. Rekombinationsbrennstoffzellen 5 weist eine Membran 7 und beidseitig davon jeweils eine Katalysatorschicht 6 und eine Gasdiffusionsschicht 14 auf. Gasdiffusionsschicht 14 und Katalysatorschicht 6 bilden zusammen eine Gasdiffusionselektrode 24. Daran schließt sich eine Bipolarplatte 15 an, die die elektrische Verbindung zur nächsten Brennstoffzelle 3 herstellt und in der Gasverteilerstrukturen 16 eingebracht sind, durch die Gasräume 17 und 18 für die Reaktanden Wasserstoff und Sauerstoff ausgebildet sind. Die an einem Gasraum 17 für Wasserstoff anliegende Elektrode 24 wird auch Anode und die an einem Gasraum 18 für Sauerstoff anliegende Elektrode 24 wird auch Kathode genannt. Kanäle zur Zu- und Abfuhr der Reaktanden zu bzw. von den Brennstoffzellen, Dichtungen etc. sind zur Vereinfachung der Darstellung nicht gezeigt.

Das Betriebsteil 13 der Brennstoffzellenanordnung 1 umfasst Anschlusstechnik, Sensoren, Ventile, Wasserabscheider, etc. Es finden sich daher Anschlüsse für die Wasserstoffzufuhr 19 bzw. -abfuhr 20 und Anschlüsse für die Sauerstoffzufuhr 21 bzw. -abfuhr 22. Weiterhin sind am betriebsteilseitigen Ende der Brennstoffzellenanordnung 1 elektrische Lastanschlüsse 23 nach außen geführt, an die eine mit Strom der Brennstoffzellenanordnung 1 zu speisende Last (nicht dargestellt) anschließbar ist. Im Ausführungsbeispiel der Figur 1 ist die Rekombinationsbrennstoffzelle 5 den Brennstoffzellen 3 im Brennstoffzellenstapel 2 in Strömungsrichtung 9 der Reaktanden direkt nachgeschaltet, sodass ein kompakter Aufbau erreicht wird.

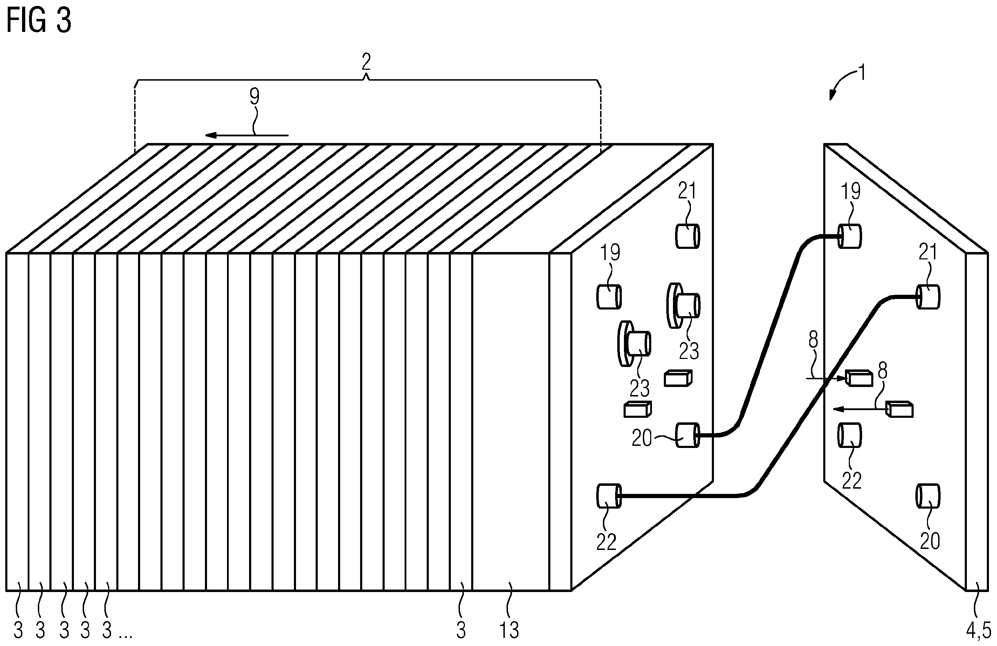

Figur 3 zeigt eine alternative Ausführungsform einer Brennstoffzellenanordnung 1 nach der Erfindung, bei der die Rekombinationsbrennstoffzelle 5 außerhalb des Brennstoffzellenstapels 2 in Strömungsrichtung 9 der Reaktanden den Brennstoffzellen 3 nachgeschaltet ist.

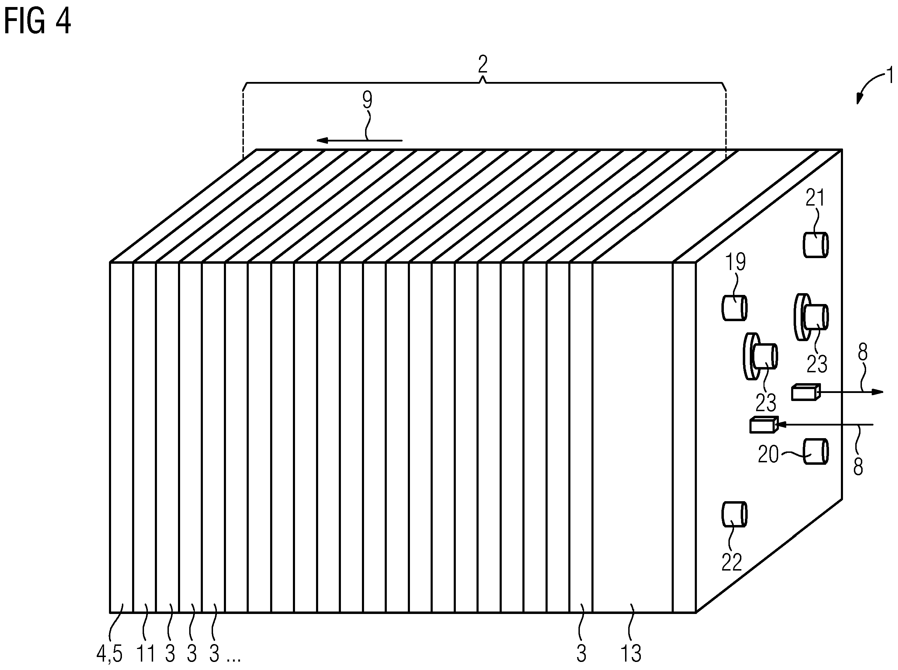

Gemäß der Erfindung ist eine Spannungs- und/oder Strommessvorrichtung 10 in die Rekombinationsbrennstoffzelle 5 integriert (s. Figur 2). In den Ausführungsbeispielen der Figuren 1 und 4 sind entsprechende Anschlüsse zum Stromkreis 8 im Bereich der übrigen Anschlüsse angeordnet. In Figur 3 finden sich entsprechende Anschlüsse an der externen Rekombinationsbrennstoffzelle 5.

Die Brennstoffzellenanordnung der Figur 4 ist gegenüber dem Ausführungsbeispiel der Figur 1 dadurch verändert, dass eine Blechrekombinationszelle 11 zwischen den Brennstoffzellen 3 und der Rekombinationsbrennstoffzelle 5 angeordnet ist. Der Aufbau einer solchen Blechrekombinationszelle 11 unterscheidet sich von dem der Rekombinationsbrennstoffzelle 5 dadurch, dass die Membran 7 der Rekombinationsbrennstoffzelle 5 durch ein Blech 12 ersetzt ist, wodurch die mechanische Stabilität gegenüber der Rekombinationsbrennstoffzelle 5 erhöht ist und die mechanische bzw. thermische Belastung infolge der Abreaktion von Wasserstoff mit Sauerstoff bereits in dieser Zelle erfolgen kann, ohne diese zu beschädigen, und somit eine mögliche Schädigung der nachfolgenden Rekombinationsbrennstoffzelle 5 verhindert werden kann.

## Patentansprüche

1. Brennstoffzellenanordnung (1) umfassend mehrere in einem Brennstoffzellenstapel (2) elektrisch und mechanisch zusammengefasste Brennstoffzellen (3), weiter umfassend eine Restgasbehandlungsvorrichtung (4) für wasserstoffhaltige und sauerstoffhaltige Restgase der Brennstoffzellen (3), wobei die Restgasbehandlungsvorrichtung (4) eine Rekombinationsbrennstoffzelle (5) mit Katalysator (6) und Membran (7) umfasst, welche über einen von den Brennstoffzellen (3) separierten Stromkreis (8) geleitet ist, **dadurch gekennzeichnet, dass** eine Spannungs- und/oder Strommessvorrichtung (10) in die Rekombinationsbrennstoffzelle (5) integriert oder an die Rekombinationsbrennstoffzelle (5) angeschlossen ist.

2. Brennstoffzellenanordnung (1) nach Anspruch 1, wobei die Rekombinationsbrennstoffzelle (5) den Brennstoffzellen (3) im Brennstoffzellenstapel (2) in Strömungsrichtung (9) der Reaktanden direkt nachgeschaltet ist.

3. Brennstoffzellenanordnung (1) nach Anspruch 1, wobei die Rekombinationsbrennstoffzelle (5) außerhalb des Brennstoffzellenstapels (2) in Strömungsrichtung (9) der Reaktanden den Brennstoffzellen (3) nachgeschaltet ist.

4. Brennstoffzellenanordnung (1) nach einem der vorhergehenden Ansprüche, wobei eine Blechrekombinationszelle (11) zwischen den Brennstoffzellen (3) und der Rekombinationsbrennstoffzelle (5) angeordnet ist, wobei in der Blechrekombinationszelle (11) die Membran (7) der Rekombinationsbrennstoffzelle (5) durch ein Blech (12) ersetzt ist.

5. Verfahren zur Behandlung wasserstoffhaltiger und sauerstoffhaltiger Restgase von Brennstoffzellen (3), bei dem die Restgase von in einem Brennstoffzellenstapel (2) elektrisch und mechanisch zusammengefassten Brennstoffzellen (3) einer Rekombinationsbrennstoffzelle (5) zugeführt werden, welche über einen von den Brennstoffzellen (3) separierten Stromkreis (8) geleitet ist, **dadurch gekennzeichnet, dass** Spannung und/oder Stromstärke der Rekombinationsbrennstoffzelle (5) gemessen wird.

6. Verfahren nach Anspruch 5, wobei die Restgase innerhalb des Brennstoffzellenstapels (2) der Rekombinationsbrennstoffzelle (5) zugeführt werden.

7. Verfahren nach Anspruch 5, wobei die Restgase aus dem Brennstoffzellenstapel (2) herausgeleitet und der Rekombinationsbrennstoffzelle (5) zugeführt werden.

8. Verfahren nach einem der Ansprüche 5 bis 7, wobei Restgase zuerst durch eine Blechrekombinationszelle (11) strömen, in der an der Stelle einer Membran (7), wie in der Rekombinationsbrennstoffzelle (5), ein Blech (12) angeordnet ist, bevor sie in die Rekombinationsbrennstoffzelle (5) geleitet werden.

## Claims

1. Fuel cell assembly (1) comprising a plurality of fuel cells (3) amalgamated electrically and mechanically in a fuel cell stack (2), further comprising a residual gas treatment device (4) for hydrogen-containing and oxygen-containing residual gases of the fuel cells (3), wherein the residual gas treatment device (4) comprises a recombination fuel cell (5) with catalyst (6) and membrane (7) that is led via a power circuit (8) separate from the fuel cells (3), **characterized in that** a measuring device (10) for voltage and/or current is integrated into the recombination fuel cell (5) or connected to the recombination fuel cell (5).

2. Fuel cell assembly (1) according to Claim 1, wherein the recombination fuel cell (5), in the flow direction (9) of the reactants, is directly downstream of the fuel cells (3) in the fuel cell stack (2).

3. Fuel cell assembly (1) according to Claim 1, wherein the recombination fuel cell (5), in the flow direction (9) of the reactants, is downstream of the fuel cells (3) outside the fuel cell stack (2).

4. Fuel cell assembly (1) according to any of the preceding claims, wherein a metal-sheet recombination cell (11) is arranged between the fuel cells (3) and the recombination fuel cell (5), the membrane (7) of the recombination fuel cell (5) being replaced in the metal-sheet recombination cell (11) by a metal sheet (12).

5. Method for treating hydrogen-containing and oxygen-containing residual gases from fuel cells (3), in which the residual gases from fuel cells (3) amalgamated electrically and mechanically in a fuel cell stack (2) are supplied to a recombination fuel cell (5) which is led via a power circuit (8) separate from the fuel cells (3), **characterized in that** voltage and/or current strength of the recombination fuel cell (5) is measured.

6. Method according to Claim 5, wherein the residual gases within the fuel cell stack (2) are supplied to the recombination fuel cell (5).

7. Method according to Claim 5, wherein the residual gases are led out of the fuel cell stack (2) and supplied to the recombination fuel cell (5).

8. Method according to any of Claims 5 to 7, wherein residual gases flow first through a metal-sheet recombination cell (11) in which instead of a membrane (7), as in the recombination fuel cell (5), a metal sheet (12) is arranged, before they are led into the recombination fuel cell (5).

## Revendications

1. Agencement (1) de piles à combustible comprenant plusieurs piles (3) à combustible rassemblées électriquement et mécaniquement en un empilement (2) de piles à combustible, comprenant en outre un dispositif (4) de traitement de gaz résiduels, pour des gaz résiduels, contenant de l'hydrogène et contenant de l'oxygène, des piles (3) à combustible, dans lequel le dispositif (4) de traitement de gaz résiduels comprend une pile (5) de combustible de recombinaison ayant un catalyseur (6) et une membrane (7), qui est en conduction avec un circuit (8) de courant séparé des piles (3) à combustible, **caractérisé en ce qu'**un dispositif (10) de mesure de la tension ou du courant est intégré dans la pile (5) à combustible de recombinaison ou est raccordé à la pile (5) à combustible de recombinaison.

2. Agencement (1) de piles à combustible suivant la revendication 1, dans lequel la pile (5) à combustible de recombinaison est, dans le sens (9) de passage des réactifs, montée directement en aval des piles (3) à combustible de l'empilement (2) de piles à combustible.

3. Agencement (1) de piles à combustible suivant la revendication 1, dans lequel la pile (5) à combustible de recombinaison est montée à l'extérieur de l'empilement (2) de piles à combustible en aval des piles (3) à combustible dans le sens (9) de passage des réactifs.

4. Agencement (1) de piles à combustible suivant l'une des revendications précédentes, une pile (11) de recombinaison à tôle est montée entre les piles (3) à combustible et la pile (5) à combustible de recombinaison, dans lequel, dans la pile (11) de recombinaison à tôle, la membrane (7) de la pile (5) à combustible de recombinaison est remplacée par une tôle (12).

5. Procédé de traitement de gaz résiduels, contenant de l'hydrogène et contenant de l'oxygène, de piles (3) à combustible, dans lequel on envoie les gaz résiduels de piles (3) à combustible, rassemblées électriquement et mécaniquement en un empilement (2) de piles à combustible, à une pile (5) à combustible de recombinaison, qui est en conduction avec un circuit (8) de courant séparé des piles (3) à combustible, **caractérisé en ce que** l'on mesure la tension et/ou l'intensité du courant de la pile (5) à combustible de recombinaison.

6. Procédé suivant la revendication 5, dans lequel on envoie, à la pile (5) à combustible de recombinaison, les gaz résiduels à l'intérieur de l'empilement (2) de piles à combustible.

7. Procédé suivant la revendication 5, dans lequel on fait sortir les gaz résiduels de l'empilement (2) de piles à combustible et on les envoie à la pile (5) à combustible de recombinaison.

8. Procédé suivant l'une des revendications 5 à 7, dans lequel des gaz résiduels passent d'abord dans une cellule (11) de recombinaison à tôle, dans laquelle au lieu d'une membrane (7), comme dans la pile (5) à combustible de recombinaison, est disposée une tôle (12), avant de les envoyer dans la pile (5) à combustible de recombinaison.
